**Europäisches Patentamt**

**European Patent Office**

**Office européen des brevets**

(19)

(11) Veröffentlichungsnummer : **0 017 803**
**B1**

(12) **EUROPÄISCHE PATENTSCHRIFT**

(45) Veröffentlichungstag der Patentschrift :
23.05.84

(21) Anmeldenummer : **80101552.0**

(22) Anmeldetag : **24.03.80**

(51) Int. Cl.³ : **G 11 B 27/02**

(54) **Verfahren zur störsignalfreien Aneinanderfügung bzw. Überblendung zweier digitaler Signalabschnitte, insbesondere von Audiosignalen.**

(30) Priorität : 29.03.79 DE 2912481

(43) Veröffentlichungstag der Anmeldung :
29.10.80 Patentblatt 80/22

(45) Bekanntmachung des Hinweises auf die Patenterteilung : 23.05.84 Patentblatt 84/21

(84) Benannte Vertragsstaaten :
AT BE CH FR GB IT LU NL SE

(56) Entgegenhaltungen :
DE-A- 1 449 423
DE-A- 1 499 757
DE-A- 2 710 781
DE-A- 2 916 973
FR-A- 2 339 306
US-A- 3 512 146
US-A- 4 067 049
JOURNAL OF THE SOCIETY OF MOTION PICTURE, vol. 87, no. 6, Juni 1978, NEW YORK (US) J. DIERMANN: "Digital videotape recording; An analysis of choices", Seiten 375-378
RADIO MENTOR ELECTRONIC, vol. 36, no. 5, Mai 1970, MÜNCHEN (DE) W. SILVIE et al.: « Automatisches elektronisches Schneiden von Videobändern », Seiten 319-320

(73) Patentinhaber : **POLYGRAM GmbH**
**Harvestehuder Weg 1-4**
**D-2000 Hamburg 13 (DE)**

(72) Erfinder : **Blüthgen, Björn**
**Gudehusweg 4**
**D-3100 Celle (DE)**

(74) Vertreter : **Mehl, Ernst, Dipl.-Ing.**
**Postfach 22 01 76**
**D-8000 München 22 (DE)**

# 0 017 803

**Beschreibung**

Die Erfindung bezieht sich auf ein Verfahren zur störsignalfreien Aneinanderfügung bzw. Überblendung zweier in Form digitaler Impulsfolgen auftretender Signalabschnitte, insbesondere von codierten Audiosignalen, unter Verwendung von zur Feststellung der Schnitt- bzw. Überblendstelle notwendigen Signalabtast- bzw. Leseeinrichtungen unter Verwendung eines den Impulsfolgen zugeordneten Zeitcodes.

Bei auf Magnetband digital gespeicherten Audiosignalen besteht das Problem, daß sich eine störsignalfreie Aneinanderfügung bzw. Überblendung zweier Programmabschnitte nicht so einfach durchführen läßt, wie dies in der Analogtechnik bisher üblich war. Die Schwierigkeit liegt zum einen darin, daß die Datenblöcke der beiden Programmabschnitte nicht willkürlich, sondern nur der vorgegebenen Datenblock-Formatierung entsprechend zeitsynchron miteinander verknüpft werden können, zum anderen darin, daß die Verbindung von zwei abrupt unterbrochenen Tonsignalfolgen akustisch nicht an jeder beliebigen Stelle ausreichend bzw. möglich ist.

Nach ersten Erfahrungen mit der digitalen Audiosignal-Aufzeichnung kann ein störsignalfreier « Schnitt » nur dann durchgeführt werden, wenn auf die Schnittstelle wenigstens einige Millisekunden Programmpause folgen. Das Auffinden einer geeigneten Schnittstelle kann beispielsweise dadurch erfolgen, daß am Ende bzw. Anfang der miteinander zu verknüpfenden Programmabschnitte mit Hilfe eines Sichtgerätes pegelgleiche Augenblickswerte in beiden Programmabschnitten gesucht werden und nachfolgend beide Signalabschnitte durch Zwischenspeicherung unter Anwendung von Zeitcodedaten miteinander verbunden werden. Die tontechnische Bearbeitung digital aufgezeichneter Programme wird daher durch Entfallen des üblichen « Scherenschrägschnittes » mit der damit verbundenen klangtechnisch störsignalfreien Überblendung zweier Programmabschnitte sowie durch die Beschränkung auf sprungfreie oder programmfreie Stellen und schließlich durch die aufwendige Bestimmung des optimalen Schnittpunktes mit Hilfe eines speziellen Sichtgerätes erheblich erschwert.

Der vorliegenden Erfindung liegt nun die Aufgabe zugrunde, für die tontechnische Bearbeitung digitaler Audiosignalprogramme ein gegenüber den bekannten analogen Maßnahmen gleichwertiges Schneidverfahren anzugeben.

Ausgehend von einem Verfahren der eingangs näher bezeichneten Art wird diese Aufgabe erfindungsgemäß in der Weise gelöst, daß die in beiden Signalabschnitten eine vorgesehene Schnitt- bzw. Überblendstelle beinhaltenden Bereich jeweils vorhandenen Impulsfolgen zusammen mit ihren durch den Zeitcode zugeordneten Zeitwerten vorabgetastet und je einem Zwischenspeicher zugeführt werden, daß ferner durch Abfragen der Zwischenspeicherinhalte in Vorwärts- und/oder Rückwärtsrichtung zyklisch gesteuert bei unterschiedlichen Geschwindigkeiten auf akustischem Wege durch Abhören der Zwischenspeicherinhalte in analoger Form sowohl eine die störungsfreie Kontinuität des Signals zulassende Schnitt- bzw. Überblendstelle innerhalb des Bereichs als auch die für eine kontrollierte Programm-Ausblendung bzw. -Einblendung erforderlichen Startzeitwerte ermittelt werden und daß bei Auslösen eines durch die ermittelten Startzeitwerte und die Zeitcodesignale gesteuerten Übergangs vom ersten auf den zweiten Signalabschnitt zugleich eine mathematische Verknüpfung der miteinander zu verbindenden Signalabschnitte im Übergangsbereich herbeigeführt wird.

Vorteilhafte Weiterbildungen des Erfindungsgedankens sind den Unteransprüchen entnehmbar.

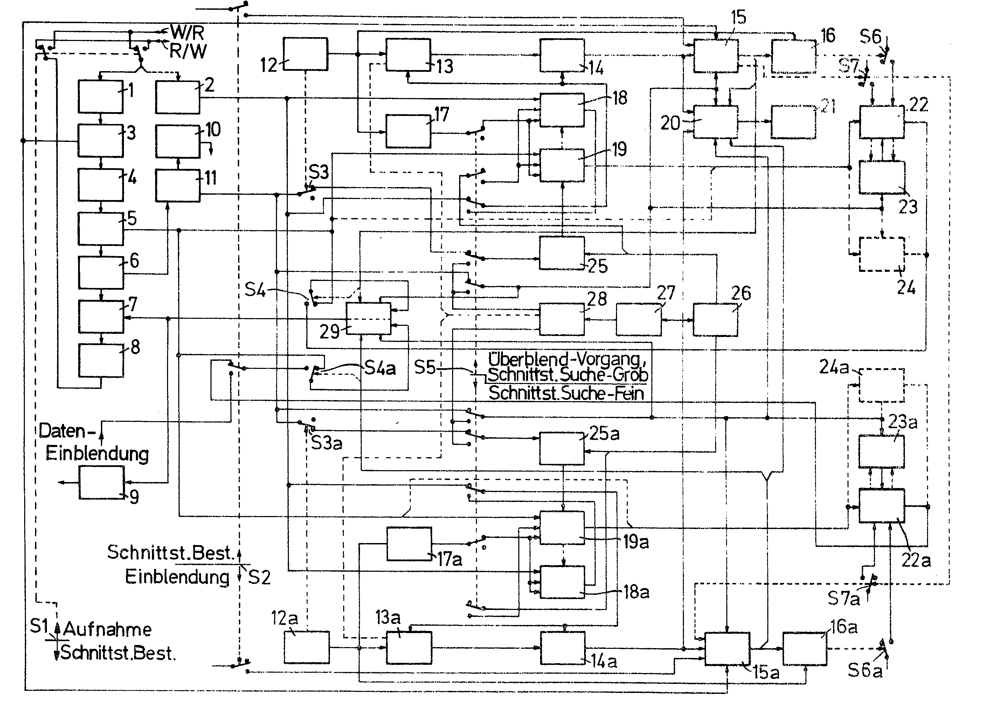

Ein Ausführungsbeispiel der Erfindung wird im folgenden anhand der Zeichnung näher erläutert.

Die Figur zeigt die Verknüpfungslogik für die Durchführung von störsignalfreien Über- bzw. Ein- und Ausblendvorgängen bei der Verbindung zweier Tonsignal-Programmabschnitte. Das z. B. auf einem Magnetband gespeicherte digitale Audiosignal wird im Bereich der jeweils in Betracht kommenden Schnittstelle mittels eines Schreib-Lesekopfes W/R ausgelesen und über einen Schalter S1 (linke Schalterstellung) sowohl einer Demodulatorstufe 1 zur Rückumwandlung der Datensignale in eine binäre Impulsfolge, als auch einer Demodulatorstufe 2 zur entsprechenden Bearbeitung der den Datensignalen zugeordneten Zeitcodesignale zugeführt. Die Tonsignal-Impulsfolge gelangt nun nacheinander in eine Funktionseinheit 3 zur Erkennung und Korrektur fehlerhaft übertragener Tonsignaldaten bzw. zur Ableitung eines Indikatorsignals für denjenigen Zeitraum, in dem eine Datenkorrektur mittels redundanter Signaldaten nicht ausreicht, anschließend an eine Schnittstelle 4 zur Ausgabe der binär codierten Tonsignal-Datenworte und ferner in einen Daten-Zwischenspeicher 5 zum Zeitausgleich der Abstandsdifferenz zwischen Vorabtast- und Schreibeinheit für datensynchrones Ein- bzw. Überblenden. Vom Datenzwischenspeicher 5 gelangen die Datensignale schließlich in einen Speicher 19, der die am Programmabschnittsende einer ersten Signalfolge auftretenden, zeitlich vor- und nachlaufenden Signaldaten einer später mittels zyklischer Wiederholung auf akustischem Wege genau definierbaren Schnitt- bzw. Überblendstelle einspeichert. Gleichzeitig werden die dem Datensignal zugeordneten Zeitcodesignale über die Demodulatorstufe 2 einem Zeitcodesignal-Speicher 18 zugeführt. Mittels einer z. B. als Drucktaste ausgebildeten Schalteinheit 12 wird in einen nachfolgenden Speicher 13 ein Zeitwert eingeschrieben, der den jeweiligen Startzeitpunkt eines « Ausblendvorganges » bestimmt, wobei dieser kontinuierlich ablaufende Einschreibe-Vorgang in einen Speicher von ca. 5 sec Kapazität nach Speichern einer weiteren, z. B. einer halben Speicherkapazität ~ 2,5 sec entsprechenden Datenmenge mittels der Funktionseinheit 17 wieder beendet wird. Parallel zum Einschreibvorgang in den Speicher 19 startet die Schalteinheit 12 außerdem über eine den Einschreibevorgang kontrollierende Schaltstufe 16 und den Schalter S6 das Einschreiben von Tonsignaldaten in den Speicher 22, der, entsprechend der für eine störsignalfreie Über- bzw. Einblendung zweier Programmabschnitte erforderlichen Zeitspannung von z. B. 20 msec nur eine relativ geringe Datenmenge aufnehmen muß.

Die für die Bearbeitung des zweiten Programmabschnitts zuständigen Funktionseinheiten, Speicher und Schalter sind in der Figur jeweils mit gleichlautenden Bezugszeichen, jedoch mit dem Zusatz « a » gekennzeichnet.

Die Ermittlung einer störsignalfreien Schnitt- bzw. Überblendstelle geschieht durch zyklisches Auslesen der in den beiden Datenspeichern 19 und 19a gespeicherten Impulsfolgen. Dieser Vorgang wird durch Umschalten des Schalters S5 ausgelöst, wobei sowohl die für die Zwischenspeicher 18, 19 und 18a, 19a zuständige Adressensteuerlogik 25 und 25a, als auch der Taktgenerator 27, ferner die manuell kontrollierte Funktionseinheit 26 zur Taktgeneratorfrequenz- und Vorwärts-Rückwärtssteuerung für die zyklische Auslesung sowie eine weitere Funktionseinheit 28 in Aktion treten. Mit der Funktionseinheit 28 können dabei die jeweiligen Zeitwerte manuell gegeneinander (Offset) oder miteinander verändert werden, die bei zyklisch gesteuerter wiederholter Auslesung der Speicherinhalte der beiden Speicher 19 und 19a mit ihren zugeordneten Zeitwerten aus 18 und 18a die jeweiligen Startzeitpunkte in den Startzeitspeichern 13 bzw. 13a für die durch eine weitere Funktionseinheit 15 bzw. 15a kontrollierte Programm-Ausblendung bzw. Einblendung festlegen. Durch die Funktionseinheiten 15 und 15a wird ferner noch die Funktionseinheit 29 gesteuert, die eine mathematische Verknüpfung der miteinander zu verbindenden Tonsignal-Programmabschnitte bewirkt, wobei deren Ausgangssignal sowohl an einen Encoder 7 zur Datenblock-Formatierung als auch an eine Schnittstelle 9 zur Auskopplung der binär-codierten Tonsignaldaten zum Zweck des analogen Abhörens gelangt. Die mathematische Verknüpfung der codierten Tonsignal-Datenworte im Überblendbereich wird dabei durch eine Zeitwert-Koinzidenz der Ausgänge der Zeitwertspeicher 13 bzw. 13a sowie der Zeitcode-Signal-Speicher 18 bzw. 18a über eine Vergleicherstufe 14 bzw. 14a aktiviert und durch die Funktionseinheit 15 bzw. 15a kontrolliert. In diesen durch externe Bedienungselemente oder z. B. durch automatische Programmabläufe gesteuerten Funktionseinheiten 15 und 15a werden sowohl die Zeitdauer des Aus- bzw. Einblendvorgangs als auch deren Pegelverläufe abgeleitet. Abgeleitet von der Zeitwert-Offset-Kontrollheit 28 werden bei der zyklischen Programmauslesung jeweils endgültige Zeitwerte für den Programm-Überblend-Anfang in den Speichern 13 und 13a erneuert sowie für die zugeordneten am Überblendvorgang beteiligten codierten Tonsignal-Datenworte in den Speicher 22 und 22a gespeichert. Mittels der Funktionseinheit 20, die den genauen Zeitpunkt für die mechanische abrupte Signaltrennung in der Mitte der Überblendvorgangs festlegt, werden die beiden Schnittstellen nacheinander einer Einrichtung 21 zur Ausführung des « mechanischen Schnitts » zugeführt und anschließend, z. B. mittels Klebeband miteinander verbunden.

Nach erneuter Betätigung des Schalters S5 und einem Vorbeilaufen der Schnittstelle am Lese-Schreibkopf R/W werden nun die in den beiden Speichern 22 und 22a gespeicherten Daten, gesteuert über die Zeitcode-Demodulatorstufe 2, Schalter S5, Speicher 13 bzw. 13a, Vergleicherstufe 14 bzw. 14a, Funktionseinheit 15 bzw. 15a, Schalter S7 bzw. S7a und weiter über die Schalter S4 bzw. S4a, über die Funktionseinheit 29 zeitgerecht für die Dauer des Überblendvorgangs ausgelesen. Über die Vorabtastung durch « Lesen » der mit Hilfsdaten zu Datenblocksequenzen verbundenen codierten Tonsignal-Datenworte über den Schalter S1, die Demodulatorstufe 1, die Funktionseinheit 3, die Schnittstelle 4 und den Datenzwischenspeicher 5 wird schließlich über eine Datenblock-Formatierungsstufe 6, eine Taktkontrollstufe 11 zur Ableitung von Taktsignalen aus den Vorabtastsignaldaten für die an den Über- Ein- oder Ausblendvorgängen beteiligten Funktionseinheiten, über die Schalter S3 bzw. S3a und S5 sowie über die Zwischenspeicher-Adressensteuerung 23 bzw. 23a sowohl das taktsynchrone Auslesen der Speicherinhalte der Speicher 22 und 22a als auch eine für den Überblendbereich und den nachfolgenden Programmabschnitt kontinuierliche Datenblockformatierung gewährleistet. Die derart miteinander verknüpften Datenblöcke gelangen nun in einen Modulator 8, der die binär-codierten Tonsignaldaten in eine dem Datenaufzeichnungsvorgang entsprechende Form umwandelt. Die Ausgangssignale des Modulators 8 werden Schließlich über den Schalter S1 (rechte Stellung) einem Lese-Schreib-Kopf R/W zugeführt und zeitgerecht in den Datenträger eingespeichert.

Die in der Figur dargestellte Verknüpfungslogik kann in vorteilhafter Weise auch zur Ausblendung sogenannter « drop outs » verwendet werden. Wird nämlich durch die Funktionseinheit 3 oder durch einen Materialfehler im Aufzeichnungsträger an der Funktionseinheit 15 bzw. 15a ein nichtkorrigierbarer « drop-out » signalisiert, so erfolgt, gesteuert durch die Funktionseinheit 15 bzw. 15a, eine zeitgerecht hörpsychologisch weiche Aus- bzw. Einblendung der einen « drop-out » umgebenden Programmabschnitte.

Bei der indirekten Verbindung zweier Programmabschnitte durch Zwischenkopieren auf einen zusätzlichen Datenträger werden die zu verbindenden, auf z. B. zwei Geräten befindlichen Programmabschnitte durch eine aus dem Speicher 13 bzw. 13a abgeleitete Zeitcode-Offset-Steuerung miteinander verkoppelt und, wie vorher im Zusammenhang mit der Ausführung eines mechanischen Schnittes beschrieben, über die Zeitcode-Vergleicherstufe 14 bzw. 14a, die Funktionseinheit 15 bzw. 15a, den Schalter S7 bzw. S7a, den Speicher 22 bzw. 22a und schließlich über den Schalter S4 bzw. S4a und die Funktionseinheit 29 miteinander zu einem kontinuierlichen kopiertem Programm verbunden.

Für die als « PUNCH-IN » bezeichnete Einsetzung neuer codierter Tonsignal-Datenworte durch

0 017 803

Überschreiben von bestehenden Tonsignaldaten im Sinne einer kontinuierlichen Programmfolge, wird durch Vorabtastung über die Demodulatorstufe 1, die Funktionseinheit 3, die Schnittstelle 4, den Datenspeicher 5 und die Datenblock-Formatierungsstufe 6 zum Zeitpunkt des Programm-Über-Einblendens und nachfolgend eine kontinuierliche störsignalfreie Datenblock-Formatierung über den Encoder 7 sichergestellt. Für die aus dem Datenspeicher 5 über den Schalter S4, der Funktionseinheit 29 zugeführten, vorerst bestehenden Tonsignal-Datenworte und die über die Schalter S2 und S4a ebenfalls der Funktionseinheit 29 zugeführten « PUNCH-IN »-Tonsignal-Datenworte wird beim Umschaltvorgang von Schalter S2 die durch die Funktionseinheit 15 bzw. 15a kontrollierte Über- bzw. Einblendung eingeleitet.

Liste der Bezugszeichen

1 Demodulatorstufe für Datensignale
2 Demodulatorstufe für Zeitcodesignale
3 Funktionseinheit zur Fehlererkennung und Korrektur
4 Schnittstelle zur Ausgabe binärcodierter Datenworte
5 Daten-Zwischenspeicher
6 Datenblock-Formatierungsstufe
7 Encoder zur Datenblock-Formatierung
8 Modulatorstufe
9 Schnittstelle zur analogen Wiedergabe
10 Schnittstelle zur synchronen Taktsteuerung von neu einzusetzenden Datenworten
11 Taktkontrollstufe
12 Schalteinheit zum Einschreiben eines Start-Zeitwertes eines Ausblendvorganges
12(a) Schalteinheit zum Einschreiben eines Start-Zeitwertes eines Einblendvorganges
13(a) Speicher für die Start-Zeitwerte
14(a) Funktionseinheit zum Vergleich der gespeicherten Zeitwerte
15(a) Funktionseinheit zur Ableitung der Zeitdauer des Aus- bzw. Einblendvorganges
16(a) Schaltstufe für das kontrollierte Einschreiben und Auslesen von für eine Signalüberblendung bestimmten Daten
17(e) Funktionseinheit zum verzögerten Beenden des Signaldaten-Einschreibevorganges
18(a) Speicher für binärcodierte Zeitwerte
19(a) Speicher für die im Bereich der Programmschnitt- bzw. Überblendstelle auftretenden Datensignale Funktionseinheit zur Ableitung des genauen Zeitpunktes für eine mechanische abrupte Signaltrennung
21 Einrichtung zur Ausführung eines « mechanischen Schnitts »
22(a) Zwischenspeicher für Datensignale
23(a) Zwischenspeicher- Adressensteuerung
24(a) Schnittstelle zum Speichern und/oder Auslesen der im Zwischenspeicher 22(a) gespeicherten Signale
25(a) Adressensteuerlogik für die Zeitwert- bzw. Daten-Zwischenspeicher 18(a)/19(a)
26 Funktionseinheit zur Taktgeneratorfrequenz- bzw. Vorwärts/Rückwärts-Steuerung
27 Taktgenerator zur zyklischen Speicher-Auslesung
28 Funktionseinheit zur manuellen gleichsinnigen bzw. gegensinnigen Veränderung der Zeitwerte Funktionseinheit zur mathematischen Verknüpfung der miteinander zu verbindenden binärcodierten Daten

W/R Schreib/Lese-Kopf
R/W Lese/Schreib-Kopf

S1 Schalter zur Schnittstellen-Vorabtastung bzw. zur Aufzeichnung der miteinander verknüpften Schnittstellen-Daten
S2 Schalter zur Einblendung (Punch-in) von binärcodierten Daten
S3 Schalter für die Festlegung eines Ausblend-Startzeitpunktes
S3(a) Schalter für die Festlegung eines Einblend-Startzeitpunktes
S4/S4a Schalter für die zeitgerechte Auslesung der in den Zwischenspeichern 22 bzw. 22(a) gespeicherten Signaldaten
S5 Umschalter zur Ermittlung einer störsignalfreien Schnitt- bzw. Überblendstelle
S6 Schalter für die Steuerung der Einschreib-Vorgänge der Zwischenspeicher-Einheiten 22/23 bzw. 22(a)/23(a)
S7(a) Schalter für die Steuerung der Lese-Vorgänge der Zwischenspeichereinheit 22/23 bzw. 22(a)/23(a)

4

**Ansprüche**

1. Verfahren zur störsignalfreien Aneinanderfügung bzw. Überblendung zweier in Form digitaler Impulsfolgen auftretender Signalabschnitte, insbesondere von codierten Audiosignalen, unter Verwendung von zur Feststellung der Schnitt- bzw. Überblendstelle notwendigen mit Zwischenspeichern zusammenarbeitenden Signalabtast- bzw. Leseeinrichtungen und unter Verwendung eines den Impulsfolgen zugeordneten Zeitcodes, dadurch gekennzeichnet, daß die in beiden Signalabschnitten im eine vorgesehene Schnitt- bzw. Überblendstelle beinhaltenden Bereich jeweils vorhandenen Impulsfolgen zusammen mit ihren durch den Zeitcode zugeordneten Zeitwerten vorabgetastet und je einem Zwischenspeicher zugeführt werden, daß ferner durch Abfragen der Zwischenspeicherinhalte in Vorwärts- und/oder Rückwärtsrichtung zyklisch gesteuert bei unterschiedlichen Geschwindigkeiten auf akustischem Wege durch Abhören der Zwischenspeicherinhalte in analoger Form sowohl eine die störungsfreie Kontinuität des Signals zulassende Schnitt- bzw. Überblendstelle innerhalb des Bereichs als auch die für eine kontrollierte Programm-Ausblendung bzw. -Einblendung erforderlichen Startzeitwerte ermittelt werden und daß bei Auslösen eines durch die ermittelten Startzeitwerte und die Zeitcodesignale gesteuerten Übergangs vom ersten auf den zweiten Signalabschnitt zugleich eine mathematische Verknüpfung der miteinander zu verbindenden Signalabschnitte im Übergangsbereich herbeigeführt wird.

2. Verfahren nach Anspruch 1, bei dem die Aneinanderfügung der beiden digitalen Signalabschnitte in Form eines mechanischen Schnitts zweier Datenträger herbeigeführt werden soll, dadurch gekennzeichnet, daß die nur im engeren Bereich der ermittelten Schnittstelle vor und nachfolgend auftretenden Impulsfolgen des dem ersten Signalabschnitt zugeordneten Zwischenspeichers bis zur Schnittstelle in einen dritten Speicher mit relativ kleinerer Speicherkapazität übertragen werden, daß anschließend durch Umschalten auf den dem zweiten Signalabschnitt zugeordneten Zwischenspeicher dessen die ebenfalls ermittelte genaue Schnittstelle im engeren Bereich umgebenden Inhalt in einen vierten Speicher übertragen wird und daß schließlich nach dem Schneidvorgang beim Überblenden die an der Schnittstelle beteiligten Impulsfolgen aus dem dritten und vierten Speicher ausgelesen und in einer kontinuierlichen Datenblock-Formatierung zeitgerecht zwischen die beiden Signalabschnitte eingefügt werden.

3. Verfahren nach Anspruch 2, dadurch gekennzeichnet, daß die für den Schnittstellenübergang erforderlichen digitalen Impulsfolgen der miteinander zu verknüpfenden Programmabschnitte zusammen mit den ihnen zugeordneten Zeitcode-Daten aus dem dritten und vierten Speicher ausgelesen und zur Sicherstellung in freie Speicherplätze innerhalb des die beiden Programmabschnitte speichernden Datenträgers eingespeichert werden.

4. Verfahren nach einem der vorhergehenden Ansprüche, dadurch gekennzeichnet, daß, um eine störsignalfreie Einblendung einer ersten digitalen Impulsfolge mit einer ersten Datenblock-Formatierung in eine zweite, ebenfalls digitale Impulsfolge mit einer zweiten Datenblock-Formatierung eines ablaufenden Programms zu ermöglichen, durch Vorabtastung der ablaufenden Impulsfolge deren Datenblock-Formatierung ermittelt und daraus eine identische Datenblock-Formatierung für die einzublendende Impulsfolge abgeleitet wird und daß mit Hilfe des vorabgetasteten Signals Schalt- und Regelvorgänge ausgelöst werden, die im Datenblock formatabhängigen vorgesehenen Zeitpunkt eine zeitsynchrone Einblendung der neuen Impulsfolge in die ablaufende Impulsfolge bewirken.

**Claims**

1. A method of combining or mixing two signal components which occur in the form of digital pulse sequences, in particular coded audio-signals, without introducing interference signals, signal sampling or read-out devices being employed to establish the cutting or mixing point as the case may be, which cooperate with intermediate stores, employing a time code assigned to the pulse sequences, characterised in that the pulse sequences which occur in each of the two signal components in the zone which contains a given cutting or mixing point are preliminarily sampled, together with their time values allocated by the time code, and are each supplied to an intermediate store, that moreover by interrogating the intermediate store contents in the forwards and/or backwards direction under cyclic control at different speeds by acoustic means by monitoring the intermediate store contents in analogue form both a cutting or mixing point within the zone which permits the interference-free continuity of the signal and also the start time values required for a monitored programming gating-out or gating-in are determined, and that when a transition from the first to the second signal component is triggered, which transition is controlled by the determined start time values and the time code signals, a mathematic logic-linking of the signal components which are to be connected is simultaneously carried out in the transition zone.

2. A method as claimed in Claim 1, wherein the joining of the two digital signal components is to be carried out in the form of a mechanical cut of two data carriers, characterised in that the pulse sequences of the intermediate store assigned to the first signal component — which pulse sequences occur only in the narrower zone of the determined cutting point before and afterwards — are transferred up to the cutting point into a third store which has a relatively smaller storage capacity, that subsequently as a result of a switch-over to the intermediate store assigned to the second signal component, the contents thereof which surrounds the likewise determined precise cutting point in the narrower zone is transferred into a fourth store, and that finally following the cutting process during the mixing the pulse sequences participating in the cutting point are read-out from the third and fourth stores and in a continuous data block format are promptly inserted between the two signal components.

3. A method as claimed in Claim 2, characterised in that the digital pulse sequences, required for the cutting point transition, of the programme sections which are to be linked to one another, together with their assigned time code data, are read out from the third and fourth stores and as a safeguard are input into free store positions within the data carrier which stores the two programme sections.

4. A method as claimed in one of the preceding claims, characterised in that in order to allow a first digital pulse sequence which possesses a first data block format to be gated free of interference signals into a second likewise digital pulse sequence which possesses a second data block format of a running programme, by preliminary sampling of the pulse sequence which is in progress the data block format thereof is determined and from this an identical data block format is obtained for the pulse sequence which is to be gated-in, and that with the assistance of the preliminarily sampled signal switching and regulating processes are triggered which at the format-dependent time provided in the data block cause a time-synchronous gating-in of the new pulse sequence into the pulse sequence which is in progress.

**Revendications**

1. Procédé pour l'imbrication ou l'enchaînement sans signaux parasites de deux séquences de signaux apparaissant sous la forme de trains d'impulsions numériques, notamment de signaux audio codés, en utilisant des dispositifs d'échantillonnage de signaux ou de lecture nécessaires pour la détermination du point de coupure ou d'enchaînement avec utilisation d'un code relatif au temps associé aux trains d'impulsions, caractérisé par le fait que les trains d'impulsions existant respectivement dans les deux séquences de signaux dans la région contenant un point de coupure ou d'enchaînement prévu sont pré-échantillonnés conjointement avec leur valeur actuelle associée par le code relatif au temps et sont respectivement appliqués à une mémoire intermédiaire, qu'en outre aussi bien un point de coupure ou d'enchaînement admettant une continuité sans perturbations du signal à l'intérieur de la région que les valeurs actuelles de début nécessaires pour une suppression ou une superposition de programme contrôlée sont déterminés cycliquement de façon commandée par interrogation du contenu des mémoires intermédiaires dans le sens d'avance et/ou de recul, pour des vitesses différentes sur le trajet acoustique en écoutant les contenus des mémoires intermédiaires sous forme analogique, et que lors du déclenchement d'une transition, commandée par les valeurs actuelles de début déterminées et les signaux de code relatif au temps, de la première à la seconde séquence de signaux il est provoqué simultanément une combinaison mathématique des séquences de signaux devant être réunies dans la région de transition.

2. Procédé suivant la revendication 1, dans lequel l'imbrication de deux séquences de signaux numériques doit être effectuée sous la forme d'une coupure mécanique de deux supports de données, caractérisé par le fait que les trains d'impulsions, apparaissant avant et après uniquement dans la région plus étroite du point de coupure déterminé, de la mémoire intermédiaire associée à la première séquence de signaux sont transmis jusqu'au point de coupure dans une troisième mémoire présentant une capacité de mémorisation relativement plus faible, qu'ensuite et par commutation sur la mémoire intermédiaire associée à la seconde séquence de signaux dont le contenu délimite le point de coupure exact également déterminé dans la région plus étroite, ils sont transmis à une quatrième mémoire, et qu'enfin après le processus de coupure, lors de l'enchaînement, les trains d'impulsions concernés par le point de coupure sont lus à partir de la troisième et de la quatrième mémoires et sont insérés à l'instant correct, dans un format continu de blocs de données, entre les deux séquences de signaux.

3. Procédé suivant la revendication 2, caractérisé par le fait que les trains d'impulsions numériques, nécessaires pour la transition au niveau du point de coupure, des sections de programme qui doivent être combinées entre elles sont lus à partir de la troisième et de la quatrième mémoires, conjointement avec les données de code relatif au temps qui leur sont associées et pour la sauvegarde sont mémorisées dans des emplacements de mémoire libres à l'intérieur du support de données qui mémorise les deux sections de programme.

4. Procédé suivant l'une des revendications précédentes, caractérisé par le fait que pour parmettre une superposition sans signaux parasites d'un premier train d'impulsions numériques, présentant un premier format de blocs de données, à un second train d'impulsions également numérique, présentant un second format de données, d'un programme en cours, on détermine par pré-échantillonnage des trains d'impulsions en cours leur format de blocs de données et on en dérive un format de blocs de données identique pour le train d'impulsions devant être superposé, et qu'à l'aide du signal pré-échantillonné on déclenche des processus de commutation et de réglage qui provoquent une superposition synchrone du nouveau train d'impulsions dans le train d'impulsions en cours, à l'instant prévu dépend du format dans le bloc de données.

W/R
R/W

12 13 14 15 16 S6
S7

18
17 20 21 22

S3 19 23

25 24

S4 27 26
28

29

Überblend-Vorgang,
S4a S5 Schnittst.Suche-Grob
Schnittst.Suche-Fein

24a

Daten-
Einblendung S3a 23a

25a

9

19a 23a

17a 22a

Schnittst.Best.
Einblendung S2 18a

12a 13a S7a

14a 16a
S1 Aufnahme 15a S6a
Schnittst.Best.

0 017 803